# EUROPÄISCHE PATENTSCHRIFT

(11) **EP 2 858 859 B1**
(45) Veröffentlichungstag und Bekanntmachung des Hinweises auf die Patenterteilung: **03.08.2016**
(21) Anmeldenummer: 13728116.8
(22) Anmeldetag: 05.06.2013
(51) Int. Cl.: B60R 21/045, B60R 21/206

(54) **KNIESCHUTZEINRICHTUNG FÜR EIN KRAFTFAHRZEUG UND KRAFTFAHRZEUG MIT EINER SOLCHEN KNIESCHUTZEINRICHTUNG**
KNEE PROTECTING DEVICE FOR A MOTOR VEHICLE AND MOTOR VEHICLE WITH SUCH A KNEE PROTECTING DEVICE
DISPOSITIF DE PROTECTION DES GENOUX POUR VÉHICULE AUTOMOBILE ET VÉHICULE AUTOMOBILE COMPORTANT UN TEL DISPOSITIF

(30) Priorität: 06.06.2012 DE 102012011191
(43) Veröffentlichungstag der Anmeldung: 15.04.2015
(73) Patentinhaber: Autoliv Development AB, 447 83 Vårgårda (SE)
(72) Erfinder: KOCK, Hans, Otto, 25368 Kiebitzreihe (DE)
(74) Vertreter: Schön, Thilo
(86) Internationale Anmeldenummer: PCT/EP2013/001652
(87) Internationale Veröffentlichungsnummer: WO 2013/182307

(56) Entgegenhaltungen:
- JP-A- 2005 297 580
- US-A- 6 032 978
- US-A1- 2002 185 847
- US-A1- 2009 250 915

## Beschreibung

Die Erfindung betrifft eine Knieschutzeinrichtung für ein Kraftfahrzeug nach dem Oberbegriff des Anspruchs 1 sowie ein Kraftfahrzeug mit einer solchen Knieschutzeinrichtung nach Anspruch 11.

Sogenannte Knieschutzeinrichtungen werden seit geraumer Zeit bei Personenkraftwagen eingesetzt. Sie befinden sich zumeist in einem unteren Teil des Armaturenbrettes und weisen einen aufblasbaren Körper auf, welcher im Falle eines Frontalzusammenstoßes vor den Knien beziehungsweise vor dem Knie-Schienbein-Bereich der zu schützenden Person, das ist der Fahrer oder der Beifahrer, aufgeblasen wird. In den meisten Fällen ist der aufblasbare Körper ein Gassack, also ein insgesamt flexibles Element, welches zumeist aus Kunststoffgewebe gefertigt ist.

Eine solche Knieschutzeinrichtung kann grundsätzlich zwei Aufgaben übernehmen, wobei in der Regel beide Aufgaben erfüllt werden, jedoch je nach Unfallsituation und Fahrzeuggeometrie die eine Aufgabe gegenüber der anderen Aufgabe im Vordergrund stehen kann. Die erste Aufgabe ist es, zu verhindern, dass der empfindliche Knie-Schienbein-Bereich auf ein hartes Strukturteil des Kraftfahrzeuges aufschlägt. Aus dieser Aufgabe leitet sich auch der Begriff "Knieschutzeinrichtung" ab. Die zweite Aufgabe hat mit dem Schutz des Knie-Schienbein-Bereiches eigentlich nichts zu tun. Der zweite Effekt einer solchen Knieschutzeinrichtung ist nämlich, dass sie auf die Gesamtkinematik eines Insassen, insbesondere eines nicht angegurteten Insassen, dahingehend einwirkt, dass eine starke Vorverlagerung des Beckens in einer translatorischen Bewegung verhindert wird.

Dies kann insbesondere dann wichtig sein, wenn der Insasse nicht angeschnallt ist.

Wie bereits erwähnt, sind die meisten Knieschutzeinrichtungen als Gassackmodule aufgebaut und umfassen ein Gehäuse, einen Inflator (Gasgenerator) und einen aus Kunststoffgewebe gefertigten, flexiblen Gassack, welcher in das Gehäuse eingefaltet ist. Steht jedoch die Verhinderung der Vorverlagerung des Beckens und nicht ein weiches Auffangen des Knie-Schienbein-Bereiches im Vordergrund, wurden auch schon anders aufgebaute Knieschutzeinrichtungen vorgeschlagen.

So zeigt beispielsweise die gattungsbildende US 6,032,978 eine Knieschutzeinrichtung, welche keinen klassischen Gassack, sondem einen als Kunststoffteil ausgebildeten aufblasbaren Körper aufweist. Der aufblasbare Körper ist dort im sogenannten Blasformverfahren hergestellt und in einem anschließenden Verfahrensschritt gefaltet. Bei Betätigung des zugeordneten, mit dem aufblasbaren Körper verbundenen Inflator wird der aufblasbare Körper wieder entfaltet und nimmt seine ursprüngliche, ihm durch den Blasformprozess gegebene Form ein. Die vorgeschlagene Knieschutzeinrichtung ist grundsätzlich stark rationalisiert herstell- und montierbar, insbesondere da sie kein separates Gehäuse benötigt.

Hiervon ausgehend stellt sich die vorliegende Erfindung die Aufgabe, eine gattungsgemäße Knieschutzeinrichtung dahingehend weiterzubilden, dass ihr Herstellungsverfahren weiter rationalisiert wird.

Diese Aufgabe wird durch eine Knieschutzeinrichtung mit den Merkmalen des Anspruchs 1 gelöst.

Erfindungsgemäß trägt der in einem Formprozess hergestellte, aufblasbare Körper ein eine Öffnung umlaufendes Gewinde, auf oder in welches eine Inflatoreinheit aufgeschraubt beziehungsweise eingeschraubt ist. Der Formprozess, durch welchen der aufblasbere Körper hergestellt ist, ist - wie bei der gattungsbildenden Knieschutzeinrichtung auch - vorzugsweise ein Blasformprozess. Das Vorsehen eines solchen Gewindes erhöht den Produktionsaufwand des aufblasbaren Körpers überhaupt nicht, da die Öffnung die selbe sein kann, welche auch zum Aufblasen während eines Blasformprozesses dient. Diese Vorgehensweise ist aus der Herstellung von PET-Getränkeflaschen bekannt und weithin erprobt. Im Falle einer PET- Getränkeflaschen dient dieses Gewinde dem Aufschrauben des Verschlussdeckels. Die Montage der Inflatoreinheit ist extrem einfach, sie muss lediglich auf das Gewinde aufgeschraubt werden, so dass vom Inflator erzeugtes Gas unmittelbar ins Innere des aufblasbaren Körpers gelangt. Hierbei erstreckt sich vorzugsweise der Inflator durch die Öffnung ins Innere des aufblasbaren Körpers hinein. Insofern hat die Öffnung dann, wenn der aufblasbare Körper in einem Blasformprozess hergestellt wird, was bevorzugt ist, eine doppelte Funktion, nämlich einerseits bei der Herstellung des aufblasbaren Körpers und andererseits bei der Anordnung der Inflatoreinheit.

Das Gewinde ist vorzugsweise als Außengewinde ausgebildet, so dass die Inflatoreinheit aufgeschraubt ist. Grundsätzlich kann das Gewinde jedoch auch als Innengewinde ausgebildet sein, in welches die Inflatoreinheit eigeschraubt ist.

Da sich durch das Verschrauben von aufblasbarem Körper und Inflatoreinheit eine im Wesentlichen starre Verbindung zwischen diesen beiden Bauteilen ergibt, können sich diese beiden Bauteile auch gegenseitig mechanisch tragen. Dies kann dadurch genutzt werden, dass der aufblasbare Körper über die Inflatoreinheit mit dem Kraftfahrzeug verbunden wird, oder dadurch, dass die Inflatoreinheit vom aufblasbaren Körper getragen wird und somit keiner weiteren Befestigung bedarf.

In den meisten Anwendungsfällen wird es zu bevorzugen sein, eine Ventilationseinrichtung vorzusehen, um eine gewisse Rück-Kompression bei Auftreffen des Insassen und somit eine Energie-Dissipation zu erlauben. Da es weiter zu bevorzugen ist, dass die Ventilationsöffnung der Ventilationseinrichtung während des Aufblasens des aufblasbaren Körpers geschlossen bleibt, kann die Ventilationseinrichtung ein Überdruckventil aufweisen. Dieses kann einfach als Einmal-Ventil, insbesondere mit einer Berstscheibe, ober auch als Proportionalventil unter Verwendung eines elastischen Elements ausgebildet werden.

Weitere vorteilhafte Ausführungsformen der Erfindung ergeben sich aus den Unteransprüchen sowie aus den nun mit Bezug auf die Figuren näher dargestellten Ausführungsbeispielen. Hierbei zeigen:
- Figur 1a: ein Spritzguss-Werkzeug zur Herstellung eines Vor-Formlings im geschlossenen Zustand,
- Figur 1b: das Spritzguss-Werkzeug aus Figur 1 a in einem geöffneten Zustand,
- Figur 2: einen Vor-Formling, welcher mit dem Werkzeug der Figuren 1 a und 1 b hergestellt ist,
- Figur 3: den Vor-Formling aus Figur 2, welcher in eine Blasform eingelegt ist,
- Figur 4: das in Figur 3 Gezeigte nach Aufblasen des Vor-Formlings,
- Figur 5: den aufgeblasenen Formling nach Entnahme aus der in den Figuren 3 und 4 gezeigten Blasform,
- Figur 6: den aufgeblasenen Formling aus Figur 5 nach Einbringen einer Ventilationsöffnung, sowie ein Berst-Ventil,
- Figur 7: das in Figur 6 Gezeigte nach Anordnen des Berst-Ventils am aufgeblasenen Formling,
- Figur 8: das in Figur 7 Gezeigte nach Falten des aufgeblasenen Formlings zum aufblasbaren Körper, sowie eine Inflatoreinheit,
- Figur 9: das in Figur 8 Gezeigte nach Anordnen der Inflatoreinheit am Gewinde des aufblasbaren Körpers,
- Figur 10: die Knieschutzeinrichtung aus Figur 9 im montierten Zustand,
- Figur 11: eine alternative Formgebung des aufgeblasenen Formlings und
- Figur 12: eine alternative Ausgestaltung einer Ventilationseinrichtung.

Die erfindungsgemäße Knieschutzeinrichtung wird nun anhand ihres Herstellungsprozesses bis zur Montage in einem Kraftfahrzeug erläutert:

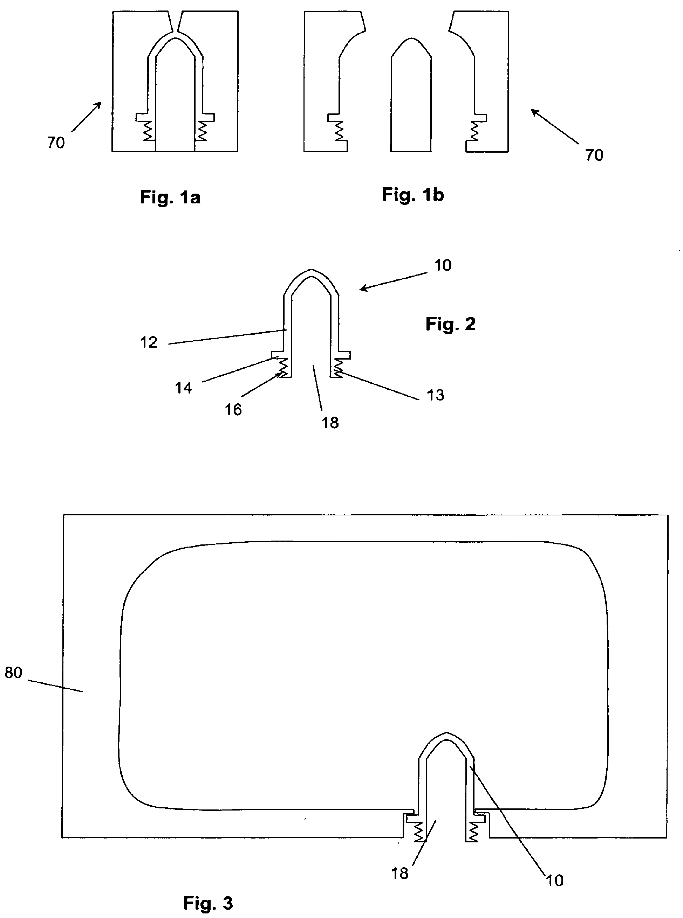

Die erfindungsgemäße Knieschutzeinrichtung der ersten Ausführungsform besteht im Wesentlichen aus drei Elementen, nämlich aus einem aufblasbaren Körper, einem Berst-Ventil und einer Inflatoreinheit. Zunächst wird mit Bezug auf die Figuren 1 bis 5 die Herstellung eines aufgeblasenen Formlings beschrieben, welcher nach Anordnung des Berst-Ventils durch Falten in den aufblasbaren Körper umgeformt wird.

Die Figuren 1 a und 1 b zeigen schematisch ein Spritzgusswerkzeug 70, welches dazu geeignet ist, einen Vor-Formling 10, wie er in Figur 2 schematisch dargestellt ist, im Spritzgussverfahren herzustellen. Das dreiteilige Werkzeug ist im Prinzip genauso aufgebaut wie bekannte Spritzgusswerkzeuge, welche zur Herstellung von Vor-Formlingen von PET- Getränkeflaschen bekannt sind. Auch der Vor-Formling 10 sieht im Wesentlichen so aus, wie ein Vor-Formling für die Herstellung einer PET- Getränkeflaschen, jedoch mit etwas größeren Dimensionen. Der Vor-Formling 10 weist einen vorgeformten Abschnitt 12, einen eine Öffnung 18 umgebenden Stutzen 13 mit einem Außengewinde 16 und einen Kragen 14, welcher den Stutzen 13 vom vorgeformten Abschnitt 12 trennt, auf.

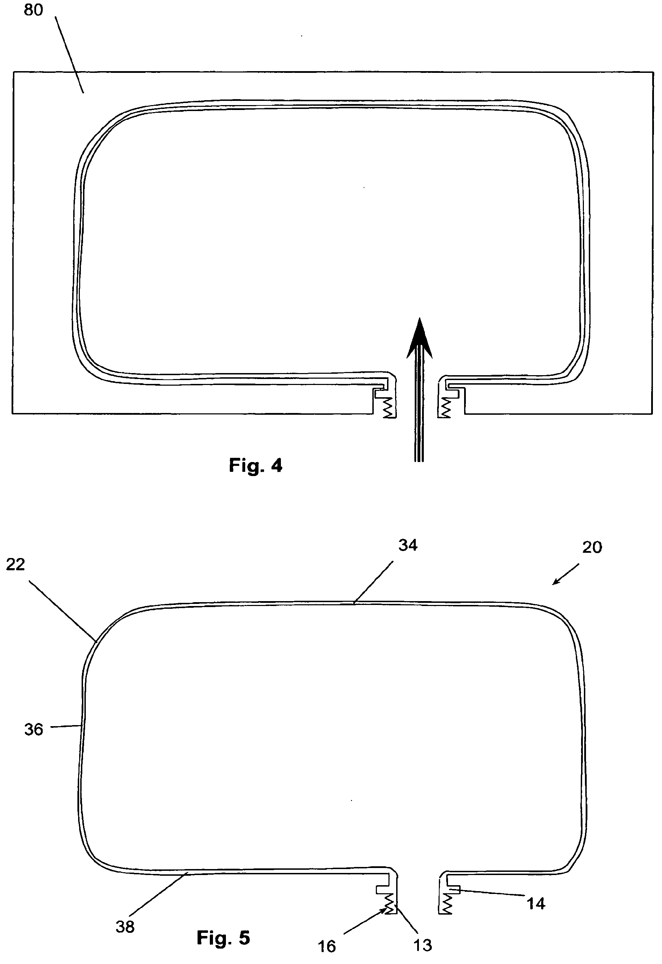

Nach dem ersten Herstellungsschritt, nämlich dem Spritzgießen des Vor-Formlings 10, wird dieser in eine Blasform 80 eingebracht (Figur 3) und durch Einblasen von Pressluft durch die Öffnung 18 (Figur 4) in einen aufgeblasenen Formling 20 (Figur 5) überführt. Der Stutzen 13 mit dem Außengewinde 16 und der Kragen 14 bleiben gegenüber dem Vor-Formling 10 unverändert, der vorgeformter Abschnitt 12 wird durch den Aufblasprozess in den aufgeblasenen Abschnitt 22 umgeformt. Hierbei verringert sich selbstverständlich die Wandstärke des vorgeformten Abschnitts 12. Die Wandstärke von Kragen 14 und Stutzen 13 mit Gewinde 16 bleibt unverändert, wodurch diese Abschnitte steif bleiben. Der aufgeblasene Abschnitt 22 weist hingegen eine im Verhältnis zum Stutzen 13 und zum Kragen 14 geringere Eigenstabilität auf. Der aufgeblasene Abschnitt 22 des aufgeblasenen Formlings 20 hat drei Abschnitte, nämlich eine Prallwand 34, eine der Prallwand im Wesentlichen gegenüberliegende Rückwand 38 und eine Prallwand 34 und Rückwand 38 verbindende Seitenwand 36. Der Abschnitt, welcher aus dem Kragen 14 und dem die Öffnung 18 umgebenden, das Gewinde 16 tragenden Stutzen 13 besteht, erstreckt sich von der Rückwand 38.

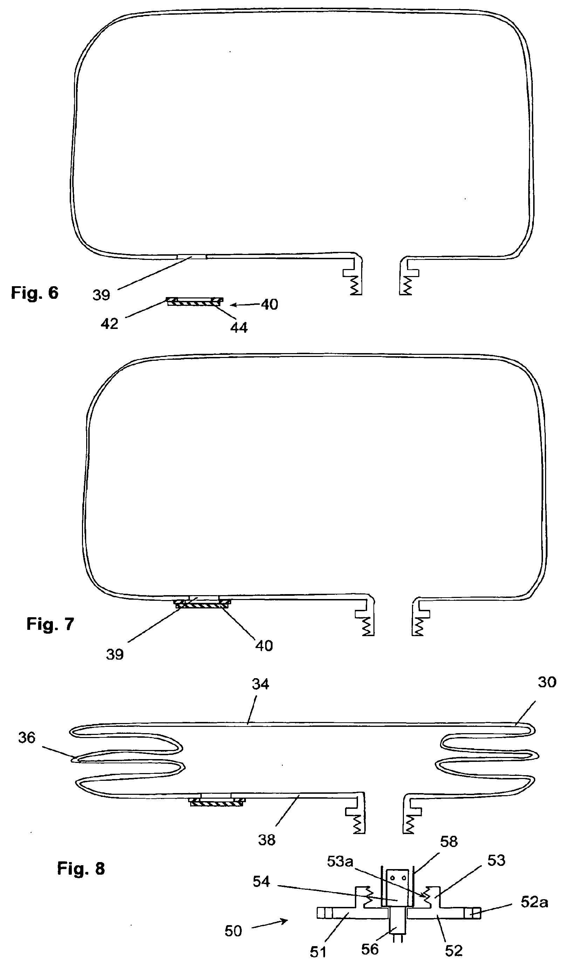

Im nächsten Verfahrensschritt, wie er in den Figuren 6 und 7 dargestellt ist, wird eine Ventilationseinrichtung hinzugefügt. Hierzu wird zunächst eine Ventilationsöffnung 39 in die Rückwand 38 geschnitten oder gebohrt. Diese Ventilationsöffnung 39 wird dann mit einem Berst-Ventil 40 verschlossen, wobei das Berst-Ventil im gezeigten Ausführungsbeispiel aus einem Ring 42 und einer mit dem Ring verbundenen, beispielsweise verklebten, Berstscheibe 44 besteht. Dieser Aufbau des Berst-Ventils 40 ist zu bevorzugen, grundsätzlich wäre jedoch auch eine unmittelbare Anordnung der Berstscheibe 44 am aufgeblasenen Abschnitt 22 möglich. Die Verbindung von Ring 42 mit der Rückwand 38 erfolgt vorzugsweise ebenfalls durch Kleben.

Im nächsten Arbeitsschritt, wie er in Figur 8 gezeigt ist, wird der aufgeblasene Abschnitt 22 des aufgeblasenen Formlings 20 komprimiert und somit der aufgeblasene Formling 20 in den aufblasbaren Körper 30 umgeformt, wobei der aufgeblasene Abschnitt 22 in den gefalteten Abschnitt 32 übergeht. Hierzu werden Prallwand 34 und Rückwand 38 aufeinander gedrückt, wodurch sich die Seitenwand 36 in einer Art Ziehharmonika-Faltung faltet. Die Luft entweicht hierbei durch die Öffnung 18. Während Prallwand 34 und Rückwand 38 noch in ihrer aufeinander gepressten Stellung gehalten werden, wird die Inflatoreinheit 50 auf das Gewinde 16 aufgeschraubt. Die Inflatoreinheit 50 ist im gezeigten Ausführungsbeispiel wie folgt aufgebaut:

Die Inflatoreinheit 50 besteht im gezeigten Ausführungsbeispiel aus im Wesentlichen drei Bestandteilen, nämlich aus einer Aufschraub-Kappe 51, einem Gasgenerator 54 mit Zündstecker 56 und einem Deflektor 58. Die Aufschraub-Kappe 51 ist im Wesentlichen in Form eines Deckels aufgebaut, nämlich mit einem ein Innengewinde 53a aufweisenden Axialabschnitt 53 und einem Flansch 52, welcher im vorliegenden Ausführungsbeispiel so ausgestaltet ist, dass er den Axialabschnitt 53 in radialer Richtung überragt und Bohrungen 52a aufweist. Der Gasgenerator 54 erstreckt sich in axialer Richtung koaxial zum Innengewinde 51 durch den Flansch 52 und ist vom genannten Deflektor 58 umgeben, so dass aus dem Gasgenerator 54 in radialer Richtung austretende heiße Gase nicht in direkten Kontakt mit einem Kunststoffmaterial des aufblasbaren Körpers 30 kommen können.

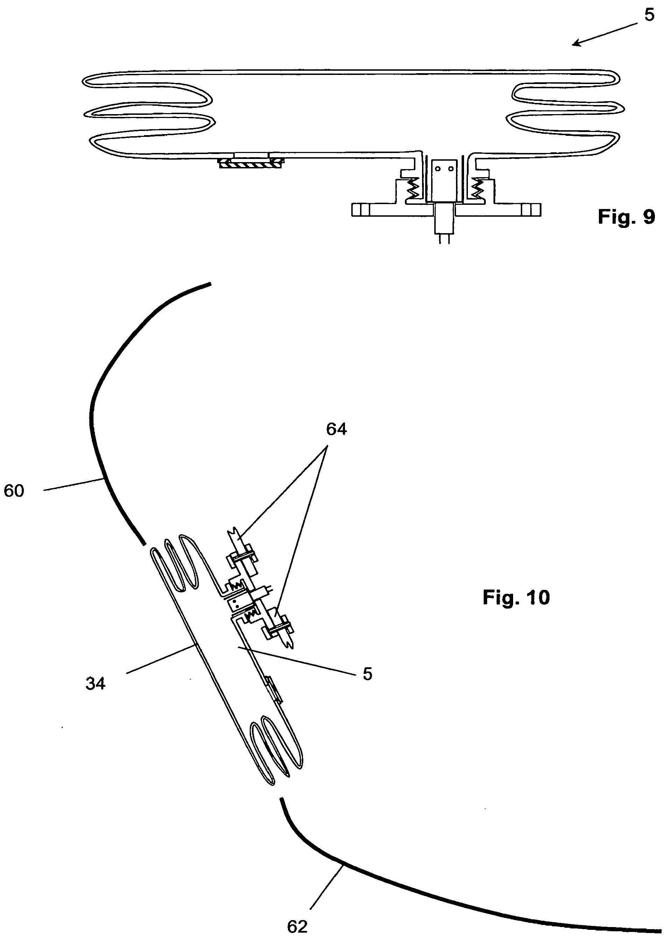

Die Inflatoreinheit 50 wird nun auf dem Gewinde 16 des aufblasbaren Körpers 30 angeordnet, das heißt, das Innengewinde 53a der Inflatoreinheit 50 wird auf das als Außengewinde ausgebildete Gewinde 16 aufgeschraubt. Dies kann vorzugsweise so erfolgen, dass die Stirnseite des Axialabschnitts 53 in Kontakt mit dem Kragen 14 kommt. Die Verschraubung ist gasdicht und kann gegebenenfalls durch ein zusätzliches Kleben gesichert werden. Auf Grund der Gasdichtigkeit der Verschraubung bleibt der gefaltete Abschnitt 32 des aufblasbaren Körpers 30 ohne weitere Maßnahmen in seiner gefalteten Stellung, da ja kein Gas ins Innere des aufblasbaren Körpers 30 zurückströmen kann (Fig. 9).

Die Figur 10 zeigt die eben beschriebene Knieschutzeinrichtung 5 im montierten Zustand, wobei die Prallwand 34 eine unmittelbare Oberfläche der Instrumententafel bilden kann, an den sich ein oberer Abschnitt 60 der Instrumententafel und ein unterer Abschnitt 62 der Instrumententafel und/oder die Fußraumdecke anschließt.

Im gezeigten Ausführungsbeispiel dient die Inflatoreinheit 50 auch dazu, die Knieschutzeinrichtung insgesamt mit dem Kraftfahrzeug zu verbinden, wozu der Flansch 52 mit den Bohrungen 52a dient, welcher mit einem Träger 64 des Kraftfahrzeuges verschraubt werden kann, wie dies in Figur 10 gezeigt ist. Es können zusätzliche Befestigungsmittel vorgesehen sein, beispielsweise in Form von Befestigungslaschen, welche an die Rückwand 38 des aufblasbaren Körpers 30 angeklebt sind. Dies ist hier nicht dargestellt. Grundsätzlich ist es jedoch wichtig, dass die geschraubte Verbindung zwischen Inflatoreinheit und aufblasbarem Körper auch dazu dient, dass die Inflatoreinheit den aufblasbaren Körper zumindest teilweise trägt oder umgekehrt. Es wäre nämlich genauso möglich, für die Inflatoreinheit keine separaten Befestigungsmittel vorzusehen und diese ausschließlich vom formstabilen Stutzen 13 des aufblasbaren Körpers 30 tragen zu lassen. Um dies erreichen zu können, ist es im beschriebenen Ausführungsbeispiel wichtig, dass der Stutzen 13 eine größere Wandstärke als der gefaltete Abschnitt 32 aufweist, damit dieser die notwendige mechanische Stabilität aufweist, welche der gefaltete Abschnitt 32 nicht aufweisen darf.

Im Falle eines Frontalzusamenstoßes wird der Gasgenerator 54 der Inflatoreinheit 50 gezündet, wodurch der Druck im Inneren des aufblasbaren Körpers 30 ansteigt und sich der gefaltete Abschnitt 32 entfaltet und somit in die Gestalt des aufgeblasenen Abschnitts 22 zurückkehrt. Treffen nun die Knie-Schienbein-Bereiche des zu schützenden Insassen auf die Prallwand, so steigt der Druck weiter, die Berstscheibe birst und der aufgeblasene Abschnitt kann unter Gasausstoß teilweise re-komprimiert werden.

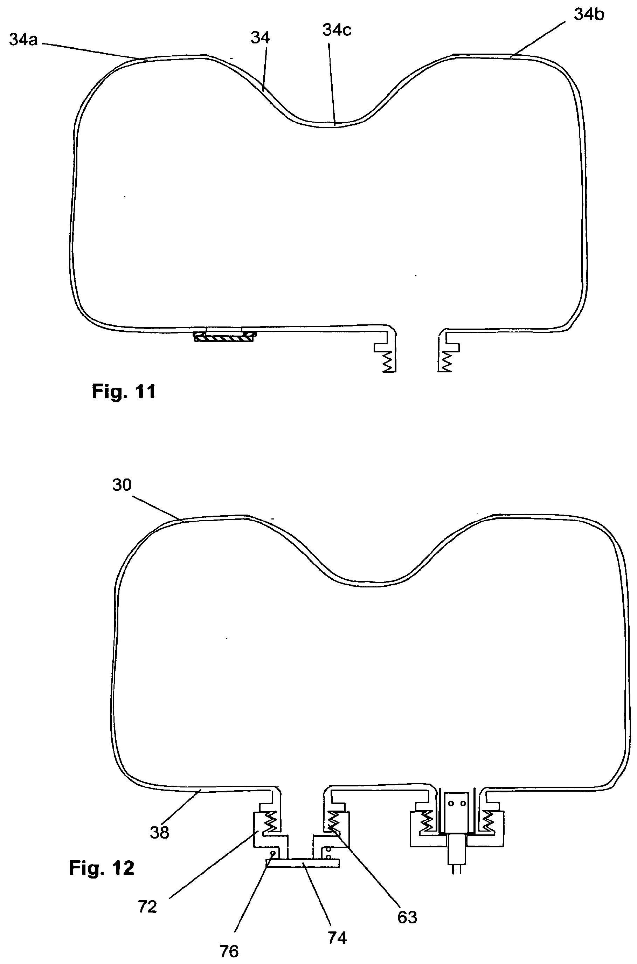

Auf Grund der Tatsache, dass der aufblasbare Körper 30, hier insbesondere seine Prallwand 34 und seine Rückwand 38, eine gewisse Eigenstabilität aufweist, ist es möglich, Prallwand 34 und/oder Rückwand 38 eine Form zu geben, welche diese auch beim Aufblasen des aufblasbaren Körpers 30 behalten. Hierdurch wird es insbesondere möglich, wie dies in Figur 11 gezeigt ist, der Prallwand 34 eine Kontur zu geben, zum Beispiel derart, dass sie zwei vorspringende Abschnitte 34a, 34b aufweist, welche von einem vertieften Zwischenbereich 34c getrennt sind. Die beiden vorspringenden Abschnitte 34a, 34b sind insbesondere den beiden Knie-Schienbein-Bereichen des zu schützenden Insassen zugeordnet. Eine solche Konturierung hat den Vorteil einer etwas besseren Nachgiebigkeit, also Weichheit, in den vorspringenden Abschnitten, sowie ein verringertes Volumen des aufgeblasenen Abschnittes.

In den allermeisten Anwendungsfällen wird das Vorsehen einer Ventilationseinrichtung notwendig sein. Das oben beschriebene erste Ausführungsbeispiel zeigt hier eine recht einfache Ventilationseinrichtung. Die Figur 12 zeigt eine alternative Ausgestaltung einer Ventilationseinrichtung, wofür die Rückwand 38 des aufblasbaren Körpers 30 einen zweiten Stutzen 63 mit einem Gewinde, welches eine zweite Öffnung 68 umgibt, aufweist. Auch hier schließt sich an den zweiten Stutzen 63 ein Kragen (zweiter Kragen 64) an; das heißt, die beiden Gewinde-Baugruppen können gleichartig ausgebildet sein. Die Herstellung ist grundsätzlich wie beim ersten Ausführungsbeispiel möglich, wozu jedoch ein etwas aufwendiger geformtes Spritzgusswerkzeug notwendig ist, so dass ein Vor-Formling 10 mit zwei Gewinden und zwei Öffnungen spritzgegossen wird. Die Ventil-Baugruppe 70 wird auf das zweite Gewinde 66 aufgeschraubt. Hierzu weist die Ventil-Baugruppe 70 im gezeigten Ausführungsbeispiel eine zweite Aufschraub-Kappe 72 und einen Schließdeckel 74 auf, welcher über eine Zugfeder 76 mit der Aufschraub-Kappe 72 gekoppelt ist. Steigt der Innendruck durch Aufschlagen des Insassen auf die Prallwand 34 über einen vorbestimmten Wert, so reicht der Druck aus, um den Schließdeckel 74 gegen die Kraft der Zugfeder 76 von der Aufschraub-Kappe 72 wegzudrücken und die zweite Öffnung 68 frei zu geben. Die Ventilationseinrichtung des zweiten Ausführungsbeispiels ist also reversibel und wirkt in gewisser Weise proportional zum Überdruck, welcher im Inneren des aufblasbaren beziehungsweise aufgeblasenen Körpers herrscht.

Das erfindungsgemäße Konzept ist auch bei anderen Herstellungsverfahren des aufblasbaren Körpers anwendbar: Insbesondere ist es möglich, den aufblasbaren Körper im Spritzgussverfahren herzustellen, insbesondere derart, dass wenigstens zwei Teile des aufblasbaren Körpers im Spritzgussverfahren hergestellt und nachfolgend miteinander verschweißt werden oder, dass der aufblasbare Körper einteilig im Spritzgussverfahren hergestellt wird. In diesem Fall kann die "Faltstruktur" schon beim Spritzgießen erzeugt werden, so dass ein separater Faltungsschritt entfällt.

### Bezugszeichenliste

- 10: Vor-Formling
- 12: vorgeformter Abschnitt
- 13: Stutzen
- 14: Kragen
- 16: Gewinde
- 18: Öffnung
- 20: aufgeblasener Formling
- 22: aufgeblasener Abschnitt
- 30: aufblasbarer Körper
- 32: gefalteter Abschnitt
- 34: Prallwand
- 34a: erster Abschnitt
- 34b: zweiter Abschnitt
- 34c: Zwischenabschnitt
- 36: Seitenwand
- 38: Rückwand
- 39: Ventilationsöffnung
- 40: Berst-Ventil
- 42: Ring
- 44: Berstscheibe
- 50: Inflatoreinheit
- 51: Aufschraub-Kappe
- 52: Flansch
- 52a: Bohrung
- 53: Axialabschnitt
- 53a: Innengewinde
- 54: Gasgenerator
- 56: Zündstecker
- 58: Deflektor
- 63: zweiter Stutzen
- 64: zweiter Kragen
- 66: zweites gewinde
- 70: Ventil-Baugruppe
- 72: zweite Aufschraub-Kappe
- 74: Schließdeckel
- 76: Zugfeder
- 60: oberer Abschnitt der Instrumententafel
- 62: unterer Abschnitt der Instrumententafel
- 64: Träger
- 70: Spritzgusswerkzeug
- 80: Blasform

## Patentansprüche

1. Knieschutzeinrichtung mit einem aufblasbaren Körper (30) und einer Inflatoreinheit (50) zum Aufblasen des aufblasbaren Körpers (30), wobei
der aufblasbare Körper (30) ein Kunststoffteil ist, welches in einem Formprozess hergestellt wurde und wobei
die Inflatoreinheit (50) mit dem aufblasbaren Körper (30) verbunden ist, **dadurch gekennzeichnet, dass** der aufblasbare Körper (30) ein eine Öffnung (18) umlaufendes Gewinde (16) aufweist, auf das die Inflatoreinheit (50) aufgeschraubt oder in das die Inflatoreinheit (50) eingeschraubt ist.

2. Knieschutzeinrichtung nach Anspruch 1, **dadurch gekennzeichnet, dass** der aufblasbare Körper (30) in einem dem Formprozess nachfolgenden Verfahrensschritt gefaltet wurde.

3. Knieschutzeinrichtung nach Anspruch 1 oder 2, **dadurch gekennzeichnet, dass** der Formprozess ein Blasformprozess ist.

4. Knieschutzeinrichtung nach Anspruch 3, **dadurch gekennzeichnet, dass** die Öffnung (18) auch zum Aufblasen des aufblasbaren Körpers (30) im Blasformprozess dient.

5. Knieschutzeinrichtung nach einem der vorangehenden Ansprüche, **dadurch gekennzeichnet, dass** am aufblasbaren Körper (30) weiterhin wenigstens ein Überdruckventil angeordnet ist, und/oder dass der aufblasbare Körper wenigstens ein Überdruckventil aufweist.

6. Knieschutzeinrichtung nach einem der vorangehenden Ansprüche, **dadurch gekennzeichnet, dass** der aufblasbare Körper eine Prallwand (34) und eine
der Prallwand im wesentlichen gegenüberliegende Rückwand (38) aufweist, wobei Prallwand (34) und Rückwand (38) ihre Form während des Aufblasens im Wesentlichen beibehalten und wobei Prallwand und Rückwand mittels einer umlaufenden Seitenwand (36) miteinander verbunden sind, wobei die Seitenwand im gefalteten Zustand des Körpers ziehharmonikaartig gefaltet ist.

7. Knieschutzeinrichtung nach Anspruch 6, **dadurch gekennzeichnet, dass** das Gewinde (16) in der Rückwand (38) angeordnet ist.

8. Knieschutzeinrichtung nach einem der Ansprüche 6 oder 7, **dadurch gekennzeichnet, dass** der Abstand zwischen der Rückwand (38) und der Prallwand (34) in einem mittleren Bereich geringer ist als in den zwei seitlichen Bereichen, welche sich im eingebauten Zustand der Knieschutzeinrichtung links und rechts des mittleren Bereichs befinden.

9. Knieschutzeinrichtung nach einem der vorangehenden Ansprüche, **dadurch gekennzeichnet, dass** der Abschnitt des aufblasbaren Körpers, welcher das Gewinde trägt eine größere Wandstärke aufweist als der aufblasbare Abschnitt des aufblasbaren Körpers.

10. Knieschutzeinrichtung nach einem der vorangehenden Ansprüche, **dadurch gekennzeichnet, dass** das Gewinde ein an einem Stutzen (13) angeordnetes Außengewinde ist.

11. Kraftfahrzeug mit einer Knieschutzeinrichtung nach einem der vorangehenden Ansprüche, **dadurch gekennzeichnet, dass** die Prallfläche des aufblasbaren Körpers Teil der Armaturentafel ist.

## Claims

1. Knee protecting device with an inflatable body (30) and an inflator unit (50) for inflating the inflatable body (30), wherein the inflatable body (30) is a plastic component, which was produced in a moulding process and wherein the inflator unit (50) is connected to the inflatable body (30), **characterised by** that the inflatable body (30) has a thread (16) circumferential to an opening (18), onto which thread the inflator unit (50) is screwed or into which the inflator unit (50) is screwed.

2. Knee protecting device according to claim 1, **characterised by** that the inflatable body (30) was folded in a process step following the moulding process.

3. Knee protecting device according to claim 1 or 2, **characterised by** that the moulding process is a blow moulding process.

4. Knee protecting device according to claim 3, **characterised by** that the opening (18) is also used for inflating the inflatable body (30) in the blow moulding process.

5. Knee protecting device according to one of the preceding claims, **characterised by** that at least one excess pressure valve is also arranged on the inflatable body (30), and/or that the inflatable body has at least one excess pressure valve.

6. Knee protecting device according to one of the preceding claims, **characterised by** that the inflatable body has an impact wall (34) and a rear wall (38) substantially opposing the impact wall, wherein the impact wall (34) and rear wall (38) substantially retain their shape during the inflation and wherein the impact wall and rear wall are connected to one another by a circumferential side wall (36), wherein the side wall is folded in the manner of an accordion in the folded state of the body.

7. Knee protecting device according to claim 6, **characterised by** that the thread (16) is arranged in the rear wall (38).

8. Knee protecting device according to one of claims 6 or 7, **characterised by** that the distance between the rear wall (38) and the impact wall (34) is smaller in a central region than in the two lateral regions, which are located in the installed state of the knee protecting device to the left and right of the central region.

9. Knee protecting device according to one of the preceding claims, **characterised by** that the section of the inflatable body that bears the thread has a greater wall thickness than the inflatable section of the inflatable body.

10. Knee protecting device according to one of the preceding claims, **characterised by** that the thread is an external thread arranged on a nozzle (13).

11. Motor vehicle with a knee protecting device according to one of the preceding claims, **characterised by** that the impact surface of the inflatable body is part of the dashboard.

## Revendications

1. Dispositif de protection des genoux comportant un corps gonflable (30) et une unité de gonflage (50) destinée à gonfler le corps gonflable (30), dans lequel ledit corps gonflable (30) consiste en un élément en matière plastique produit au cours d'un processus de formage et dans lequel
l'unité de gonflage (50) est reliée au corps gonflable (30), **caractérisé en ce que** le corps gonflable (30) présente un filet (16) qui entoure une ouverture (18) et sur lequel ou dans lequel l'unité de gonflage (50) vient se visser.

2. Dispositif de protection des genoux selon la revendication 1, **caractérisé en ce que** le corps gonflable (30) a été plié au cours d'une étape de procédé faisant suite au processus de formage.

3. Dispositif de protection des genoux selon la revendication 1 ou 2, **caractérisé en ce que** le processus de formage consiste en un processus de soufflage.

4. Dispositif de protection des genoux selon la revendication 3, **caractérisé en ce que** l'ouverture (18) sert également au gonflage du corps gonflable (30) au cours du processus de soufflage.

5. Dispositif de protection des genoux selon l'une quelconque des revendications précédentes, **caractérisé en ce qu'il** est en outre agencé au moins une soupape de surpression sur le corps gonflable (30), et/ou **en ce que** le corps gonflable présente au moins une soupape de surpression.

6. Dispositif de protection des genoux selon l'une quelconque des revendications précédentes, **caractérisé en ce que** le corps gonflable présente une paroi d'impact (34) et une paroi arrière (38) sensiblement opposée à la paroi d'impact, lesdites paroi d'impact (34) et paroi arrière (38) conservant sensiblement leur forme pendant le gonflage et lesdites paroi d'impact et paroi arrière étant reliées entre elles au moyen d'une paroi latérale circonférentielle (36), ladite paroi latérale étant pliée en accordéon lorsque le corps est à l'état plié.

7. Dispositif de protection des genoux selon la revendication 6, **caractérisé en ce que** le filet (16) est réalisé dans la paroi arrière (38).

8. Dispositif de protection des genoux selon l'une quelconque des revendications 6 et 7, **caractérisé en ce que** l'écart séparant la paroi arrière (38) et la paroi d'impact (34) est moins important dans une zone médiane que dans les deux zones latérales situées, une fois le dispositif de protection des genoux installé, sur la gauche et sur la droite de la zone médiane.

9. Dispositif de protection des genoux selon l'une quelconque des revendications précédentes, **caractérisé en ce que** la partie du corps gonflable portant le filet présente une paroi plus épaisse que celle de la partie gonflable du corps gonflable.

10. Dispositif de protection des genoux selon l'une quelconque des revendications précédentes, **caractérisé en ce que** le filet consiste en un filetage externe pratiqué sur une tubulure (13).

11. Véhicule automobile comportant un dispositif de protection des genoux selon l'une quelconque des revendications précédentes, **caractérisé en ce que** la surface d'impact du corps gonflable fait partie du tableau de bord.
